# EUROPÄISCHE PATENTSCHRIFT

(11) **EP 1 842 725 B1**
(45) Veröffentlichungstag und Bekanntmachung des Hinweises auf die Patenterteilung: **08.07.2009**
(21) Anmeldenummer: 07104876.3
(22) Anmeldetag: 26.03.2007
(51) Int. Cl.: B60Q 1/26

(54) **Dachbalken für Einsatzfahrzeuge**
Roof beam for emergency vehicles
Chevron pour véhicule opérationnel

(30) Priorität: 08.04.2006 DE 102006016655
(43) Veröffentlichungstag der Anmeldung: 10.10.2007
(73) Patentinhaber: Hella KGaA Hueck & Co., 59552 Lippstadt (DE)
(72) Erfinder: Krimphove, Reiner, 59227, Ahlen (DE)

(56) Entgegenhaltungen:
- EP-A- 0 566 361
- US-A1- 2004 109 313
- US-A1- 2004 252 021

## Beschreibung

Die Erfindung betrifft einen Dachbalken für Einsatzfahrzeuge mit einer Bodenplatte zur Verbindung mit einem Fahrzeug und einer ein- oder mehrteiligen Haube, wobei in dem durch die Bodenplatte und die Haube gebildeten Innenraum eine Mehrzahl von optischen und/oder akustischen Signalisierungsmodulen angeordnet sind, und wobei die Bodenplatte zumindest eine zum Fahrzeugdach offene, quer zur Fahrzeuglängserstreckung annähernd T- oder Ω-förmig ausgebildete Nut aufweist.

Aus der DE 20 2004 017 722 U1 ist ein derartiger Dachbalken für Einsatzfahrzeuge bekannt. Die Bodenplatte, die aufgrund einer gewünschten steifen und leichten Ausführung als Strangpressprofil, insbesondere aus Aluminium ausgebildet ist, weist mehrere sowohl zum durch die Bodenplatte und die Haube gebildeten Innenraum, als auch zum Fahrzeugdach offene, quer zur Fahrzeuglängserstreckung ausgebildete T-Nuten auf. In der DE 20 2004 017 722 U1 wird kein Hinweis darauf gegeben, wie der Dachbalken dauerhaft fest und sicher mit dem Fahrzeug verbunden wird. Es wird lediglich darauf verwiesen, dass zwischen der Bodenplatte und dem Fahrzeug eine Dichtung angeordnet ist.
Aus der Praxis ist es bekannt, derartige Dachbalken mittels Schrauben zu befestigen, die durch entsprechende Bohrungen im Fahrzeugdach geführt werden. Dabei werden entweder die Schrauben vom Fahrzeuginnenraum her in fest am Dachbalken befestigte Muttern, insbesondere Blindnietmuttern eingeschraubt, oder in an der Bodenplatte ausgebildete Nuten werden die Schraubenköpfe eingeschoben und der Schaft der jeweiligen Schraube wird durch eine Bohrung in den Fahrzeuginnenraum eingeschoben und mit einer Mutter befestigt. Gattungsgemäße Dachbalken der Letztgenannten Art sind aus der US 2004/109 313 A1, EP-A-0 566 361 und US 2004/ 252 021 A1 bekannt. Da derartige Dachbalken auf einer Vielzahl von unterschiedlichen Fahrzeugen montiert werden, sind eine Vielzahl von Bohrungen, bzw. Blindnietmuttern an der Bodenplatte vorzusehen, da sich aufgrund der unterschiedlichen Fahrzeuggeometrien eine Vielzahl von Befestigungsvarianten ergeben. Weiterhin ist es bei Dachbalken für Einsatzfahrzeuge üblich, bei Zerstörung bzw. Austausch des Dachbalkens aber auch bei Fahrzeugwechsel die wiederverwertbaren Elemente des Dachbalkens für den Aufbau neuer Dachbalken zu nutzen. Sollten sich jetzt bei der Bodenplatte Blindnietmuttern gelöst habe, so ist eine Wiederverwertung der Bodenplatte nicht möglich.
Demzufolge weisen bekannte Befestigungsarten von Dachbalken für Einsatzfahrzeuge den Nachteil auf, dass sie sehr aufwendig mit einer Vielzahl von Anschraubpunkten gestaltet werden müssen, was einen erheblichen Arbeits- und somit Kostenaufwand bedeutet. Weiterhin ist es nachteilig, dass die Bodenplatten bedingt durch lockere oder fehlende Blindnietmuttern nicht immer für eine Wiederverwertung nutzbar sind.

Es ist Aufgabe der Erfindung, einen gemäß dem Oberbegriff des Anspruchs 1 ausgebildeten Dachbalken für Einsatzfahrzeuge derart weiterzubilden, dass eine einfache, sichere und schnelle Montage auf dem Fahrzeugdach gewährleistet ist.

Diese Aufgabe wird für einen Dachbalken für Einsatzfahrzeuge mit einer Bodenplatte zur Verbindung mit einem Fahrzeug und einer ein- oder mehrteiligen Haube, wobei in dem durch die Bodenplatte und die Haube gebildeten Innenraum eine Mehrzahl von optischen und/oder akustischen Signalisierungsmodulen angeordnet sind, und wobei die Bodenplatte zumindest eine zum Fahrzeugdach offene, quer zur Fahrzeuglängserstreckung annähernd T- oder Ω-förmig ausgebildete Nut aufweist dadurch gelöst, dass in der Nut zumindest ein frei verschiebbares Klemmelemente angeordnet ist, das eine Gewindebohrung aufweist, in die vom Fahrzeuginnenraum her zumindest eine Gewindeschraube einschraubbar ist, um den Dachbalken klemmend auf dem Fahrzeugdach festzusetzen.
Dadurch, dass das zumindest eine Klemmelement frei verschiebbar in der Nut angeordnet ist, ergibt sich quer zur Fahrzeuglängserstreckung eine frei wählbare Befestigungsposition, so dass der Dachbalken auf einer Vielzahl von unterschiedlichen Fahrzeugen befestigt werden kann. Das Klemmelement, welches als Nutenstein ausgebildet sein kann, weist zur klemmenden Befestigung eine Gewindebohrung auf, in die von der Fahrzeuginnenseite her eine Gewindeschraube einschraubbar ist, und wobei die Baugruppe Schraube-Klemmelement dann eine Klemmkraft zwischen Bodenplatte und Fahrzeugdach erzeugt, durch die der Dachbalken dauerhaft sicher auf dem Fahrzeug festgesetzt ist. Zur Montage des Dachbalkens muss einfach nur das Klemmelement von einer Seite her in die Nut der Bodenplatte, die als Strangpressprofil, insbesondere aus Aluminium ausgebildet sein kann, eingeschoben werden. Dann wird der Dachbalken auf das Fahrzeugdach aufgesetzt und eine Schraube wird von der Fahrzeuginnenseite her durch eine im Fahrzeugdach befindliche Bohrung hindurch in das Gewinde des Klemmelementes eingeschraubt, bis der Dachbalken auf dem Fahrzeugdach festgeklemmt ist. Zur Abdichtung ist zwischen der Bodenplatte und dem Fahrzeugdach ein Dichtungselement angeordnet.
Die Nut kann im Querschnitt sowohl annähernd T-förmig als auch Ω-förmig ausgebildet sein, wobei dem Fachmann eine Vielzahl von Maschinenbauprofilen bekannt sind, die den Zweck der Erfindung, nämlich die Bodenplatte mittels eines Halteelementes an dem Fahrzeug zu fixieren, erfüllen, so dass auch diese Profilformen durch den Schutzbereich der Erfindung abgedeckt sind.

Bei einer vorteilhaften Ausgestaltung der Erfindung weist das Klemmelement ein Fixierelement auf. Dies Fixierelement dient dazu, dass das in die Nut der Bodenplatte eingeschobene Klemmelement nach dem Einschieben an der Stelle gehalten wird, an der es später festgeschraubt werden soll. Somit kann das Klemmelement erst in die Nut eingeschoben und dann der Dachbalken auf das Fahrzeugdach gesetzt werden, ohne dass sich das Klemmelement ungewollt verschiebt. Somit ergibt sich durch das Fixierelement eine einfache und sichere Montage.

Das Fixierelement ist vorteilhaft als federndes Element, insbesondere als federbelastete Kugel und/oder als federndes Blech ausgebildet, so dass sich ein möglichst einfacher Aufbau für das Fixierelement ergibt.

Um einen sicheren Halt des Dachbalkens auf dem Fahrzeug zu gewährleisten, weist die Bodenplatte zumindest zwei quer zur Fahrzeuglängserstreckung annähernd T-oder Ω-förmig ausgebildete Nuten auf, in denen eine Mehrzahl von Klemmelementen angeordnet sind.

Um den Fahrzeuginnenraum möglichst effektiv gegen störende Geräusche der Signalisierungsmodule zu schützen, weist die Bodenplatte zwischen der Nut und dem durch die Bodenplatte und die Haube gebildeten Innenraum keine Öffnung auf, so dass sich eine Trennung zwischen Befestigungsbereich und Funktionsbereich ergibt.

Sollten die zur Befestigung verwendeten Schrauben länger sein, als die Nut an Tiefe aufweist, so weist die Bodenplatte zwischen der Nut und dem durch die Bodenplatte und die Haube gebildeten Innenraum Öffnungen auf, so dass die Schrauben durch die Klemmelemente und die Bodenplatte hindurch in den Innenraum hineinragen können.

Anhand der beigefügten Zeichnungen wird die Erfindung nachfolgend näher erläutert. Dabei zeigt:

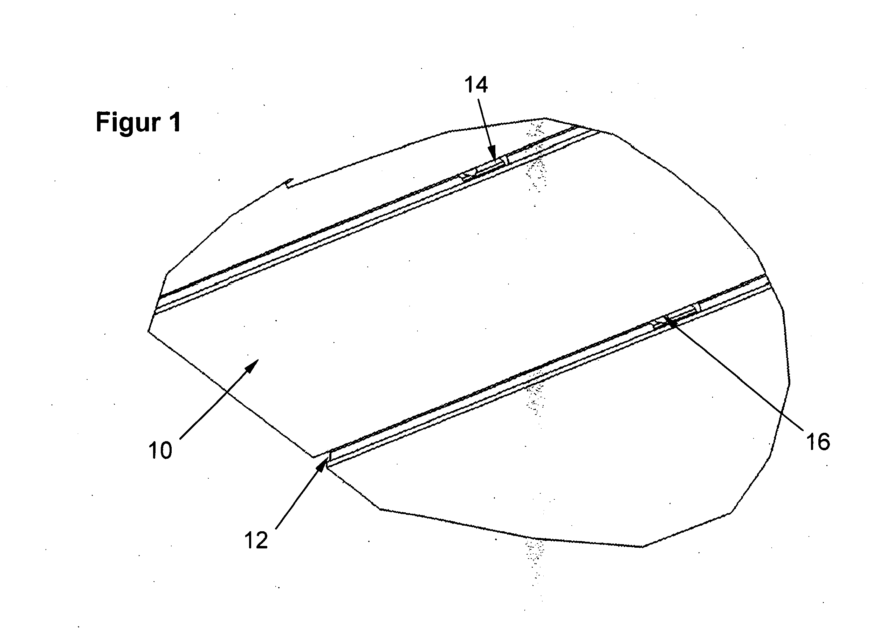

- Fig. 1: einen Ausschnitt einer Draufsicht von der Unterseite eines Dachbalkens für Einsatzfahrzeuge in einer perspektivischen Ansicht,
- Fig. 2: eine Seitenansicht von der Fahrzeugaußenseite auf den in Figur 1 dargestellten Ausschnitt und
- Fig. 3: ein Klemmelement in Drauf- und Seitenansicht.

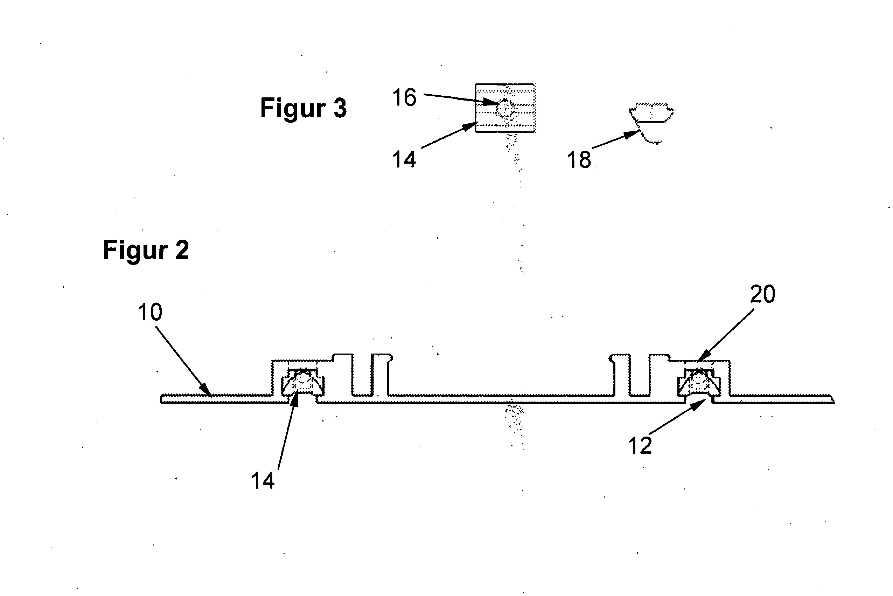

In die zum Fahrzeugdach offenen, quer zur Fahrzeuglängserstreckung ausgebildeten T-Nuten (12) der Bodenplatte (10) werden von der Fahrzeugaußenseite her Klemmelemente (14) in Form von Nutensteinen bis zu der Position eingeschoben, an der später vom Fahrzeuginnenraum her Gewindeschrauben in die Gewindebohrungen (16) der Klemmelemente (14) eingeschraubt werden sollen. Nach dem Aufsetzen des Dachbalkens auf dem Fahrzeugdach werden die Gewindeschrauben durch entsprechend in das Fahrzeugdach eingebrachte Bohrungen hindurch in die Gewindebohrungen (16) der Klemmelemente (14) ein- und festgeschraubt, bis der Dachbalken aufgrund der formschlüssigen Verbindung zwischen den Klemmelementen (14) und den T-Nuten (12) dauerhaft fest und sicher auf dem Fahrzeugdach fixiert ist. Falls die Gewindeschrauben länger sind, als der Abstand zwischen den fahrzeuginnenseitigen Anlageflächen und Nutgründen der T-Nuten (12), so können die Gewindeschrauben durch in die Bodenplatte eingebrachte Öffnungen (20) in den durch die Bodenplatte (10) und die hier nicht dargestellte Haube gebildeten Innenraum hineinragen.
Damit die Klemmelemente (14) genau an der vorbestimmten Position verbleiben und sich nicht während des Aufsetzens des Dachbalkens auf dem Fahrzeugdach verschieben, weisen die Klemmelemente (14) federbelastete Fixierelemente auf. Wie in Figur 3 dargestellt, kann das Fixierelement (18) als federndes Blech ausgebildet sein, welches vor dem Einschieben in die T-Nut (12) entsprechend gebogen und dadurch gespannt wird. In der T-Nut (12) liegt das federnde Blech dann am Nutgrund an und fixiert so das Klemmelement (14) gegen ungewolltes Verrutschen. Sobald beim Verschieben des Klemmelementes (14) eine gewisse, die Haltekraft des Fixierelementes (18) übersteigende Kraft aufgewendet wird, kann man das Klemmelement (14) entsprechend in der T-Nut (12) verschieben.

### Bezugszeichenliste

- 10: Bodenplatte
- 12: Nut
- 14: Klemmelement
- 16: Gewindebohrung
- 18: Fixierelement
- 20: Öffnung

## Patentansprüche

1. Dachbalken für Einsatzfahrzeuge mit einer Bodenplatte (10) zur Verbindung mit einem Fahrzeug und einer ein- oder mehrteiligen Haube, wobei in dem durch die Bodenplatte (10) und die Haube gebildeten Innenraum eine Mehrzahl von optischen und/oder akustischen Signalisierungsmodulen angeordnet sind, und wobei die Bodenplatte (10) zumindest eine zum Fahrzeugdach offene, quer zur Fahrzeuglängserstreckung annähernd T- oder Ω-förmig ausgebildete Nut (12) aufweist, **dadurch gekennzeichnet, dass** in der Nut (12) zumindest ein frei verschiebbares Klemmelement (14) angeordnet ist, das eine Gewindebohrung (16) aufweist, in die vom Fahrzeuginnenraum her zumindest eine Gewindeschraube einschraubbar ist, um den Dachbalken klemmend auf dem Fahrzeugdach festzusetzen.

2. Dachbalken für Einsatzfahrzeuge nach Anspruch 1, **dadurch gekennzeichnet, dass** das Klemmelement (16) ein Fixierelement (18) aufweist.

3. Dachbalken für Einsatzfahrzeuge nach Anspruch 2, **dadurch gekennzeichnet, dass** das Fixierelement (18) als federndes Element ausgebildet ist.

4. Dachbalken für Einsatzfahrzeuge nach Anspruch 3, **dadurch gekennzeichnet, dass** das federnde Element als federbelastete Kugel ausgebildet ist.

5. Dachbalken für Einsatzfahrzeuge nach Anspruch 3, **dadurch gekennzeichnet, dass** das federnde Element als federndes Blech ausgebildet ist.

6. Dachbalken für Einsatzfahrzeuge nach einem der vorstehenden Ansprüche, **dadurch gekennzeichnet, dass** die Bodenplatte (10) zumindest zwei quer zur Fahrzeuglängserstreckung annähernd T- oder Ω-förmig ausgebildete Nuten (12) aufweist, in denen eine Mehrzahl von Klemmelementen (14) angeordnet sind.

7. Dachbalken für Einsatzfahrzeuge nach einem der vorstehenden Ansprüche, **dadurch gekennzeichnet, dass** die Bodenplatte (10) zwischen der Nut (12) und dem durch die Bodenplatte (10) und die Haube gebildeten Innenraum keine Öffnung aufweist.

8. Dachbalken für Einsatzfahrzeuge nach einem der Ansprüche 1 bis 6, **dadurch gekennzeichnet, dass** die Bodenplatte (10) zwischen der Nut (12) und dem durch die Bodenplatte (10) und die Haube gebildeten Innenraum Offnungen (20) aufweist.

## Claims

1. Roof rack for emergency vehicles comprising a base plate (10) for connection with a vehicle, and a single-part or multi-part hood, wherein the base plate (10) and hood form an inside cavity containing a plurality of optical and/or acoustic signaling modules and wherein the base plate (10) has at least one approximately T-shaped or Ω-shaped groove (12) which opens towards the vehicle roof and runs horizontally across the long axis of the vehicle, **characterized in that** a clamping element (14) freely moving along the groove (12) has a threaded hole (16) that at least one threaded bolt can be screwed into from inside the passenger compartment such that the roof rack is clamped and fixed on the vehicle roof.

2. Roof rack for emergency vehicles of claim 1, **characterized in that** the clamping element (16) has a fixing fitting (18).

3. Roof rack for emergency vehicles of claim 2, **characterized in that** the fixing fitting (18) is designed as a springable element.

4. Roof rack for emergency vehicles of claim 3, **characterized in that** the springable element is designed as a spring-loaded ball.

5. Roof rack for emergency vehicles of claim 3, **characterized in that** the springable element is designed as a springable piece of metal sheet.

6. Roof rack for emergency vehicles of one of the above claims, **characterized in that** the base plate (10) has at least two approximately T-shaped or Ω-shaped grooves (12) which run horizontally across the long axis of the vehicle and contain a plurality of clamping elements (14).

7. Roof rack for emergency vehicles of one of the above claims, **characterized in that** the base plate (10) has no opening between the groove (12) and the inside cavity formed by the base plate (10) and the hood.

8. Roof rack for emergency vehicles of claims 1 to 6, **characterized in that** the base plate (10) has openings (20) between the groove (12) and the inside cavity formed by the base plate (10) and the hood.

## Revendications

1. Rampe de toit pour véhicules d'intervention avec une plaque de fond (10) à fixer sur le véhicule et un recouvremet en une ou plusieurs parties, plusieurs modules de signalisation optiques et/ou acoustiques étant disposés dans l'espace intérieur formé par la plaque de fond (10) et le recouvrement, et la plaque de fond (10) présentant au moins une rainure (12) ouverte en direction du toit du véhicule, perpendiculaire à l'allongement longitudinal du véhicule de forme approximative de T ou Ω, **caractérisé en ce qu'**au moins un élément de serrage (14) à déplacement libre se trouve dans la rainure, lequel élément présente un perçage fileté (16) où peut être vissée au moins une vis filetée par l'habitacle du véhicule pour bloquer la rampe de toit sur le toit du véhicule.

2. Rampe de toit pour véhicules d'intervention selon la revendication 1, **caractérisée en ce que** l'élément de serrage (16) présente un élément de fixation (18).

3. Rampe de toit pour véhicules d'intervention selon la revendication 2, **caractérisée en ce que** l'élément de fixation (18) est formé comme élément à ressort.

4. Rampe de toit pour véhicules d'intervention selon la revendication 3, **caractérisée en ce que** l'élément à ressort est formé comme bille à ressort.

5. Rampe de toit pour véhicules d'intervention selon la revendication 3, **caractérisée en ce que** l'élément à ressort est formé comme tôle à ressort.

6. Rampe de toit pour véhicules d'intervention selon l'une des revendications ci-avant, **caractérisée en ce que** la plaque de fond (10) présente au moins deux rainures (12) perpendiculaires à l'allongement longitudinal du véhicule en forme approximative de T ou Ω, dans lesquelles sont disposées plusieurs éléments de serrage (14).

7. Rampe de toit pour véhicules d'intervention selon l'une des revendications ci-avant, **caractérisée en ce que** la plaque de fond (10) entre la rainure (12) et l'espace intérieur formé par la plaque de fond (10) et le recouvrement ne présente pas d'ouverture.

8. Rampe de toit pour véhicules d'intervention selon l'une des revendications 1 à 6, **caractérisée en ce que** la plaque de fond (10) entre la rainure (12) et l'espace intérieur formé par la plaque de fond (10) et le recouvrement présente des ouvertures.
